# EUROPÄISCHE PATENTSCHRIFT

(11) **EP 0 524 542 B1**
(45) Veröffentlichungstag und Bekanntmachung des Hinweises auf die Patenterteilung: **20.09.1995**
(21) Anmeldenummer: 92112102.6
(22) Anmeldetag: 15.07.1992
(51) Int. Cl.: B29C 61/06, B32B 7/12

(54) **Verfahren zur Herstellung eines schrumpfbaren Schlauches mit einer Schmelzkleberschicht**
Method for making a shrinkable tube with a melt adhesive layer
Procédé de fabrication d'un tube rétractable avec une couche d'adhésif fusible

(30) Priorität: 23.07.1991 DE 4124402
(43) Veröffentlichungstag der Anmeldung: 27.01.1993
(73) Patentinhaber: RXS Schrumpftechnik-Garnituren GmbH, D-58093 Hagen (DE)
(72) Erfinder: Fröhlich, Franz-Friedrich, W-5800 Hagen 1 (DE)
(74) Vertreter: Fuchs, Franz-Josef, Dr.-Ing.

(56) Entgegenhaltungen:
- EP-A- 0 102 187
- EP-A- 0 292 676
- DE-A- 3 723 980
- GB-A- 1 033 959
- US-A- 4 373 554

## Beschreibung

Die Erfindung betrifft ein Verfahren zur Herstellung eines schrumpfbaren Schlauches mit einer Schmelzkleberschicht sowie einem nach diesem Verfahren hergestellter Schlauch.

Aus der englischen Patentschrift 1.033.959 ist ein derartiges Verfahren zur Herstellung eines selbstdichtenden schrumpfbaren Schlauches mit einer Beschichtung aus einem schmelzbaren Material bekannt. Hier werden zwei Schichten verschiedenen Materials extrudiert und konzentrisch aneinander gebracht. Dabei ergibt sich, daß die gegenseitige Haftung der beiden Schichten zu Dichtungsproblemen führen kann.

Aus der EP-A-292 676 ist ein schrumpfbarer Schlauch bekannt, dessen äußerer Wandungsbereich einen niedrigeren Vernetzungsgrad aufweist als der innere, dem zu umhüllenden Substrat zugewandten Wandungsbereich. Auf der Innenseite ist zusätzlich eine Schmelzkleberschicht aufgebracht.

Aufgabe der vorliegenden Erfindung ist nun, ein Verfahren zur Herstellung eines schrumpfbaren Schlauches mit einer Beschichtung zu finden, bei dem die Voraussetzungen für eine bessere gegenseitige Haftung und damit für eine bessere Abdichtung der Schichten gegeben sind.

Weiterhin ist Aufgabe der Erfindung, einen Schrumpfschlauch zu schaffen, der nach diesem Verfahren hergestellt ist.

Die erste Aufgabe wird dadurch gelost, daß der Schlauch mit einer haftvermittelnden Schicht versehen wird, daß dieser Schlauch und die haftvermittelnde Schicht vernetzt und gereckt werden und daß danach auf die haftvermittelnde Schicht zumindest teilweise eine Schmelzkleberschicht aufgebracht wird.

Die gestellte zweite Aufgabe wird mit einem Aufbau eines schrumpfbaren Schlauches nach den Merkmalen des Patentanspruches 4 gelöst.

Bisher wurde unter anderem versucht, die Haftung zwischen dem Material des Schlauches und einer Schmelzkleberschicht dadurch zu verbessern, daß die Oberfläche des Schlauches mit Corona-Bestrahlung behandelt wurde. Doch diese Behandlung ist sehr aufwendig und wartungsbedürftig, so daß der erreichte Erfolg nicht völlig zufriedenstellend ist. Auch die Zufügung von verschiedenen Additiven zu den Grundmaterialien brachte nicht den erhofften Erfolg.

Das Verfahren gemäß der Erfindung zur Herstellung eines schrumpfbaren Schlauches mit einer Schmelzkleberschicht zielt darauf hin, daß eine spezielle haftvermittelnde Schicht zwischen dem schrumpfbaren Schlauch und der Schmelzkleberschicht angeordnet wird, die zu beiden Materialien besonders gute Hafteigenschaften aufweist. Hierzu eignen sich besonders Materialien aus entsprechenden Copolymeren, mit z.B. klebrigmachenden Harzen, Polyamid oder Ethylenvinylacetat. Diese haftvermittelnde Schicht wird sinnvoller Weise in Coextrusion auf das Material des später schrumpfbaren Schlauches aufgebracht oder gleich in das Material des Schlauches stoffschlüssig einextrudiert, so daß sich eine feste Verbindung zum Material des Schlauches ergibt. Diese haftvermittelnde Schicht ist so abgestimmt, daß sie zumindest an der Oberfläche beim Beschichtungsvorgang mit dem Schmelzkleber anschmilzt und somit auch zur Kleberschicht eine innige Verbindung ergibt.

Bei der Herstellung des Grundschlauches aus dem an sich bekannten Schrumpfcompound durch Extrusion wird in Coextrusion die haftvermittelnde Schicht beispielsweise aus einer dünnen Schicht eines Klebermaterials, wie zum Beispiel polyamidhaltiges Copolymerisat aufgebracht. Bei der anschließenden Vernetzung des Schlauches, der auch als Manschette mit längsseitigen Verschlußelementen ausgebildet sein kann, wird auch das Klebermaterial zumindest teilvernetzt. Damit würden jedoch die Klebeeigenschaften nicht mehr ausreichen, so daß nun auf diese haftvermittelnde Schicht nach dem Vernetzen die eigentliche Schmelzkleberschicht mit guter Haftung aufgebracht werden kann.

Durch diesen Zweischichten-Kleberauftrag ist es möglich, den Schlauch oder die Manschette auch unterschiedlich dick zu beschichten, wobei man zum Beispiel die Hauptbeschichtung nur partiell vornimmt. Damit kann man zum Beispiel ungünstige Wärmeleitungen durch zu dicken Kelberauftrag in kritischen Bereichen, wie zum Beispiel in Untertrittsbereichen von Manschetten, verhindern. Selbstverständlich ist auch nur eine bereichsweise Anordnung von Schmelzkleberschichten möglich, die dann vorzugsweise in den eigentlichen Dichtungsbereichen aufgebracht werden. Das Material für den schrumpfbaren Schlauch besteht aus den üblichen Schrumpfcompounds, wie zum Beispiel einem Polyolefin, vorzugsweise aus Polyethylen. Das Material der haftvermittelnden Schicht besteht aus einem thermoplastischen Material mit einem Schmelzpunkt, der in der Größenordnung des Schmelzpunktes der Schmelzkleberschicht, vorzugsweise bei ca. 100 ° C liegt, so daß auch hier eine innige Haftung zustande kommt. Für die Schmelzkleberschicht wird ebenfalls ein an sich bekanntes Kunststoffcompound, zum Beispiel ein Polyamidkleber verwendet.

Die Erfindung wird nun anhand einer Figur näher erläutert, in der der Aufbau eines erfindungsgemäßen schrumpfbaren Schlauches mit Schmelzkleberschicht dargestellt ist.

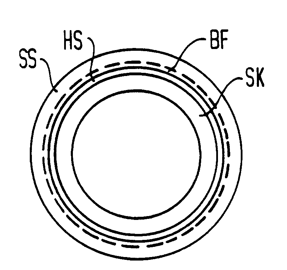

Die Figur 1 zeigt in Frontansicht den schrumpfbaren Schlauch SS, auf dessen Innenseite die haftvermittelnde Schicht HS aufgebracht ist. Dabei ist ein Übergangsbereich der beiden Berührungsflächen BF angedeutet, in dem die innige Haftung zwischen dem Material des schrumpfbaren Schlauches SS und der haftverbindenden Schicht HS, zum Beispiel durch Verschmelzung oder Einlagerung erfolgt. Im Inneren ist in konzentrischer Anordnung die Schmelzkleberschicht SK aufgebracht, die aufgrund der ausgewählten Materialeigenschaften ebenfalls eine innige Haftung zur darunter liegenden haftvermittelnden Schicht HS aufweist.

## Patentansprüche

1. Verfahren zur Herstellung eines schrumpfbaren Schlauches (SS) mit einer Schmelzkleberschicht (SK),
**dadurch gekennzeichnet,**
daß der Schlauch (SS) auf der Innenseite mit einer haftvermittelnden Schicht (HS) versehen wird, daß dieser Schlauch (SS) und die haftvermittelnde Schicht (HS) vernetzt und gereckt werden und daß danach auf die haftvermittelnde Schicht (HS) zumindest teilweise eine Schmelzkleberschicht (SK) aufgebracht wird.

2. Verfahren nach Anspruch 1,
**dadurch gekennzeichnet,**
daß der Schlauch (SS) mit der haftvermittelnden Schicht (HS) in Coextrusion hergestellt wird.

3. Verfahren nach einem der vorhergehenden Ansprüche,
**dadurch gekennzeichnet,**
daß der Schlauch (SS) und die haftvermittelnde Schicht (HS) in ihren Berührungsflächen (BF) miteinander verschmolzen werden.

4. Schrumpfbarer Schlauch (SS) mit einer Schmelzkleberschicht (SK),
**dadurch gekennzeichnet,**
daß der Schlauch (SS) aus einem Polyolefin, vorzugsweise aus Polyethylen, besteht, daß eine haftvermittelnde Schicht (HS) aus einem Kunststoffmaterial, vorzugsweise aus einem Copolymer wie zum Beispiel Polyamid oder Ethylenvinylacetat-Copolymerisat, auf der Innenseite angeordnet ist, daß der Schlauch (SS) und die haftvermittelnde Schicht (HS) gemeinsam vernetzt sind und daß die haftvermittelnde Schicht (HS) zum Material des Schlauches (SS) wie auch zu einer darunterliegenden Schmelzkleberschicht (SK) gute Hafteigenschaften aufweist.

5. Schrumpfbarer Schlauch nach Anspruch 4,
**dadurch gekennzeichnet,**
daß die Haftung zwischen dem Schlauch (SS) und der haftvermittelnden Schicht (HS) durch Materialverschmelzung erfolgt ist.

6. Schrumpfbarer Schlauch nach Anspruch 4,
**dadurch gekennzeichnet,**
daß die haftvermittelnde Schicht (HS) im Schlauch (SS) einextrudiert ist.

7. Schrumpfbarer Schlauch nach einem der Ansprüche 4 bis 6,
**dadurch gekennzeichnet,**
daß die Schmelzkleberschicht (SK) aus einem an sich bekannten Kunststoffcompound, vorzugsweise aus Polyamid, besteht.

8. Schrumpfbarer Schlauch nach einem der Ansprüche 4 bis 7,
**dadurch gekennzeichnet,**
daß die haftvermittelnde Schicht (HS) teilvernetzt ist.

9. Schrumpfbarer Schlauch nach einem der Ansprüche 4 bis 8,
**dadurch gekennzeichnet,**
daß die haftvermittelnde Schicht (HS) vorzugsweise eine Schmelztemperatur aufweist, die der zum Auftragen der Schmelzkleberschicht (SK) benötigten Temperatur entspricht, wobei die haftvermittelnde Schicht (HS) zumindest oberflächenhaft beim Auftragsvorgang anschmelzbar ist.

10. Schrumpfbarer Schlauch nach einem der Ansprüche 4 bis 9,
**dadurch gekennzeichnet,**
daß die Schmelzkleberschicht (SK) unterschiedlich dick ist.

11. Schrumpfbarer Schlauch nach einem der Ansprüche 4 bis 10,
**dadurch gekennzeichnet,**
daß die Schmelzkleberschicht (SK) bereichsweise, vorzugsweise in den vorgesehenen Dichtungsbereichen, angeordnet ist.

## Claims

1. Method of producing a shrinkable sleeve (SS) having a hot melt adhesive layer (SK), characterized in that the sleeve (SS) is provided with an adhesion-promoting layer (HS) on the inside, in that said sleeve (SS) and the adhesion-promoting layer (HS) are crosslinked and stretched, and in that a hot melt adhesive layer (SK) is then at least partly applied to the adhesion-promoting layer (HS).

2. Method according to Claim 1, characterized in that the sleeve (SS) is produced in coextrusion with the adhesion-promoting layer (HS).

3. Method according to one of the preceding claims, characterized in that the sleeve (SS) and the adhesion-promoting layer (HS) are fused together in their contact areas (BF).

4. Shrinkable sleeve (SS) having a hot melt adhesive layer (SK), characterized in that the sleeve (SS) is composed of a polyolefin, preferably polyethylene, in that an adhesion-promoting layer (HS) composed of a plastics material, preferably of a copolymer such as, for example, polyamide or ethylene/vinyl acetate copolymer, is disposed on the inside, in that the sleeve (SS) and the adhesion-promoting layer (HS) are jointly cross-linked, and in that the adhesion-promoting layer (HS) has good adhesion properties with respect to the material of the sleeve (SS) and also with respect to a hot melt adhesive layer (SK) situated underneath.

5. Shrinkable sleeve according to Claim 4, characterized in that the adhesion between the sleeve (SS) and the adhesion-promoting layer (HS) takes place by material fusion.

6. Shrinkable sleeve according to Claim 4, characterized in that the adhesion-promoting layer (HS) is extruded into the sleeve (SS).

7. Shrinkable sleeve according to one of Claims 4 to 6, characterized in that the hot melt adhesive layer (SK) is composed of a plastics compound known per se, preferably of polyamide.

8. Shrinkable sleeve according to one of Claims 4 to 7, characterized in that the adhesion-promoting layer (HS) is partially crosslinked.

9. Shrinkable sleeve according to one of Claims 4 to 8, characterized in that the adhesion-promoting layer (HS) preferably has a melting point which corresponds to the temperature needed to apply the hot melt adhesive layer (SK), the adhesion-promoting layer (HS) being meltable at least superficially during the application process.

10. Shrinkable sleeve according to one of Claims 4 to 9, characterized in that the hot melt adhesive layer (SK) is of variable thickness.

11. Shrinkable sleeve according to one of Claims 4 to 10, characterized in that the hot melt adhesive layer (SK) is provided in certain regions, preferably in the planned sealing regions.

## Revendications

1. Procédé de fabrication d'un tuyau souple (SS) rétractable ayant une couche (SK) de colle fusible
caractérisé
en ce qu'il consiste à munir le tuyau souple (SS) sur la face intérieure d'une couche (HS) donnant de l'adhérence, à réticuler ce tuyau souple (SS) et cette couche (HS) donnant de l'adhérence et à les étirer et à déposer ensuite sur la couche (HS) donnant de l'adhérence, au moins partiellement, une couche (SK) de colle fusible.

2. Procédé suivant la revendication 1,
caractérisé
en ce qu'il consiste à fabriquer le tuyau souple (SS) avec la couche (HS) donnant de l'adhérence par coextrusion.

3. Procédé suivant l'une des revendications précédentes,
caractérisé
en ce qu'il consiste à fondre ensemble en leur surface (BF) de contact le tuyau souple (SF) et la couche (HS) donnant de l'adhérence.

4. Tuyau souple thermorétractable ayant une couche (SK) de colle fusible,
caractérisé
en ce que le tuyau souple (SS) est en polyoléfine, de préférence en polyéthylène, en ce qu'une couche (HS) donnant de l'adhérence en une matière plastique, de préférence en un copolymère, comme par exemple en polyamide, ou en un copolymère d'éthylène et d'acétate de vinyle, est disposée sur la face intérieure, en ce que le tuyau souple (SS) et la couche (HS) donnant de l'adhérence sont réticulés ensemble et en ce que la couche (HS) donnant de l'adhérence présente, vis-à-vis de la matière du tuyau souple (SS) comme vis-à-vis d'une couche (SK) de colle fusible sous-jacente, de bonnes propriétés adhésives.

5. Procédé suivant la revendication 4,
caractérisé
en ce que l'adhérence entre le tuyau souple (SS) et la couche (HS) donnant de l'adhérence s'effectue par fusion de matière.

6. Procédé suivant la revendication 4,
caractérisé
en ce que la couche (HS) donnant de l'adhérence est extrudée dans le tuyau souple (SS).

7. Procédé suivant l'une des revendications 4 à 6,
caractérisé
en ce que la couche (SK) de colle fusible est en un composite de matières plastiques connu en soi, par exemple en polyamide.

8. Procédé suivant l'une des revendications 4 à 7,
caractérisé
en ce que la couche (HS) donnant de l'adhérence est réticulée partiellement.

9. Procédé suivant l'une des revendications 4 à 8,
caractérisé
en ce que la couche (HS) donnant de l'adhérence a, de préférence, un point de fusion qui correspond à la température nécessaire à l'application de la couche (SK) de colle fusible, la couche (HS) donnant de l'adhérence pouvant fondre au moins en surface lors de l'opération d'application.

10. Procédé suivant l'une des revendications 4 à 9,
caractérisé
en ce que la couche (SK) de colle fusible a des épaisseurs différentes.

11. Procédé suivant l'une des revendications 4 à 10,
caractérisé
en ce que la couche (SK) de colle fusible est disposée par zones, de préférence dans les zones prévues pour l'étanchéité.
